# EUROPÄISCHE PATENTSCHRIFT

(11) **EP 2 078 874 B1**
(45) Veröffentlichungstag und Bekanntmachung des Hinweises auf die Patenterteilung: **14.08.2013**
(21) Anmeldenummer: 08000469.0
(22) Anmeldetag: 11.01.2008
(51) Int. Cl.: F16C 29/04, F16C 33/46

(54) **Linearführung**
Linear guide
Guidage linéaire

(43) Veröffentlichungstag der Anmeldung: 15.07.2009
(73) Patentinhaber: AB SKF, 415 50 Göteborg (SE)
(72) Erfinder: Edelmann, Ludwig, 97727 Sulzthal (DE); Geyer, Andreas, 97509 Kolitzheim-Unterspiesheim (DE); Gransow, Anita, 97526 Sennfeld (DE); Jeschka, Erwin, 97711 Maßbach (DE)
(74) Vertreter: Kohl, Thomas

(56) Entgegenhaltungen:
- DE-A1-102006 054 256
- DE-U1- 20 007 499
- JP-A- 55 060 718
- JP-A- 57 090 417
- US-A- 4 961 649

## Beschreibung

Ein Problem bei Linearführungen besteht im Wandern des Käfigs infolge von Gleitbewegungen der Wälzkörper. In verschiedenen Vorschlägen finden sich daher zwangsweise geführte Käfige. Aus der US 6 155 719 ist beispielsweise eine Linearführung bekannt, bei der ein Zahnradgetriebe die Bewegung des Käfigs synchronisiert. In der DE 295 07 243 UI ist eine Linearführung mit Führungselementen und einem dazwischen angeordneten Käfig mit Wälzkörpern gezeigt, bei der an dem Käfig zwei Vorsprünge vorgesehen sind, die jeweils in eine Ausnehmung eines der beiden Führungselemente eingreifen. Durch die Vorsprünge ist die Bewegung des Käfigs zwar begrenzt, Maßnahmen zur Verhinderung eines Gleitens der Wälzkörper sind in dieser Schrift aber nicht aufgezeigt. Aus US 4961649 ist eine weitere Linearführung bekannt. Besagtes Problem tritt dabei auch bei Linearführungen auf, bei denen wenigstens die Laufbahn eines der Führungselemente derart ausgebildet ist, dass mit einem Längsverschieben der Führungselemente gegeneinander eine Abstandsänderung zwischen den Führungselementen einhergeht.

Die Aufgabe der vorliegenden Erfindung besteht darin, eine Linearführung, bei der wenigstens die Laufbahn eines der Führungselemente derart ausgebildet ist, dass mit einem Längsverschieben der Führungselemente gegeneinander eine Abstandsänderung zwischen den Führungselementen einhergeht, mit einer einfachen und kostengünstigen synchronisierten Käfigbewegung zu schaffen.

Die Aufgabe wird durch den Gegenstand des Anspruchs 1 gelöst. Vorteilhafte Ausgestaltungen sind in den weiteren Ansprüchen beschrieben.

Der Vorteil der erfindungsgemäßen Linearführung besteht darin, dass der Käfig bei einer Relativbewegung der Führungselemente durch das Hebelgetriebe bewegt wird, wodurch sicher gestellt ist, dass sich der Käfig immer synchron zur Relativbewegung der Laufbahnen bewegt. Ein Wandern des Käfigs ist dadurch ausgeschlossen. Für die Begrenzung des Hubs sind keine zusätzlichen Maßnahmen oder Teile erforderlich, so dass sich der Einsatz eines Hebelgetriebes auch wegen der raumsparenden Bauweise insbesondere für den Kleinhubbereich eignet. Außerdem wird das Abrollen der Wälzkörper auf den Laufbahnen begünstigt, so dass ein Gleiten der Wälzkörper weitestgehend vermieden wird. Das Hebelgetriebe stellt somit eine einfache und raumsparende Maßnahme dar, eine Synchronisation der Bewegung der Führungselemente und des Käfigs mit einer Hubbegrenzung zu kombinieren, da der Hub bei Hebelgetrieben durch die Hebelgeometrie definiert werden kann.

In einer konstruktiven Ausgestaltung des Hebelgetriebes ist wenigstens ein Hebel vorgesehen, der an einem der Führungselemente oder dem Käfig schwenkbar gehalten ist, und an dem anderen Führungselement und dem Käfig beziehungsweise an beiden Führungselementen ist ein Führungszapfen vorgesehen, der in ein sich in der Längsrichtung des Hebels erstreckendes Langloch insbesondere mit geringer Spielpassung eingreift. Ohne weitere Elemente wird damit die gewünschte Zwangsführung des Käfigs erreicht. Die Langlöcher begrenzen auch den Bewegungsspielraum der Führungszapfen, woraus sich die Hubbegrenzung der Laufflächen ergibt. Der über den Gelenkzapfen gehaltene Hebel stellt eine einfache und kostengünstige Ausführung eines Hebelgetriebes dar. Statt des Langlochs kann auch ein teleskopierbarer Hebel verwendet werden.

In einer weiter bevorzugten Ausführungsform sind die Laufbahnen in eine Abfolge gleichmäßig rampenförmig ausgebildeter Segmente unterteilt. Weiterhin bevorzugt ist eine Ausführungsform, bei der die Segmente kehlnutförmig ausgebildet sind. Wenn die beiden angrenzenden Rampen die gleiche Neigung aufweisen, kann der Abstand der Führungselemente zueinander durch Bewegen des Wälzelements in die eine oder andere Richtung in gleicher Weise verändert werden. Bei unterschiedlichen Neigungen der beiden angrenzenden Rampen ergeben sich unterschiedliche Übersetzungsverhältnisse, beispielsweise eine schnellere Zunahme des Abstandes bei einer steileren Rampe. Die Segmente können unmittelbar aufeinander folgen, wobei sich entlang der Laufbahnen ein Nutgrund mit einem Grat abwechselt, die Segmente können aber auch vereinzelt angeordnet sein.

In einer alternativen Ausführungsform sind die Segmente sägezahnförmig ausgebildet, wobei die Rampen der einen Laufbahn entgegengesetzt zu den Rampen der anderen Laufbahn ausgebildet sind. Diese Ausführungsform eignet sich für Linearführungen, bei denen die Bewegung der Wälzkörper nur in einer Richtung erfolgt, um den Abstand der Führungselemente zueinander zu verändern. In der anderen Richtung kann der steile Rücken der Sägezahnform einen Anschlag für den benachbarten Wälzkörper bilden.

Vorzugsweise steigen die Rampen linear oder progressiv an, so dass sich der Abstand der Führungselemente zueinander bei einer gleichmäßigen Bewegung entsprechend linear oder progressiv verändert.

Die Erfindung betrifft auch die Verwendung einer Linearführung nach einer der vorhergehenden Ausführungsformen in einer Reibungsbremse mit einem Stellantrieb und einem Bremsbelag, bei der wenigstens ein Führungselement mit dem Bremsbelag einer Reibungsbremse verbunden ist und der Stellantrieb auf das andere Führungselement oder auf das Hebelgetriebe wirkt. Dadurch eignet sich die Linearführung beispielsweise für den Einsatz bei Reibungsbremsen im Fahrzeugbau, wo sie als mechanischer Bremskraftverstärker fungiert und das Gleiten der Wälzkörper auf Rampen vermeidet. Der begrenzte Hub verhindert unter allen Umständen ein Überrollen des Segmentendes.

In einer bevorzugten Anwendung üben die Antriebselemente der Reibungsbremse eine Stellkraft oder ein Stellmoment auf den wenigstens einen Hebel aus, wobei entweder beide Führungselemente auf Bremsbeläge wirken können oder ein Führungselement die Linearführung ortsfest abstützt.

Weiter bevorzugt ist eine Anwendungsform, bei der die Hebel mit Sensoren zur Winkelerfassung versehen sind, deren Ausgangssignal zu Steuerungszwecken eingesetzt werden kann.

Nachfolgend wird anhand der beigefügten Zeichnungen näher auf Ausführungsbeispiele der Erfindung eingegangen. Es zeigen:
- Figur 1: eine Linearführung in einer Seitenansicht;
- Figur 2: eine perspektivische Ansicht der Linearführung nach Figur 1;
- Figur 3: eine Seitenansicht der Linearführung nach Figur 1 in einer anderen Stellung der Führungselemente zueinander, und
- Figur 4: eine Seitenansicht einer alternativen Ausführungsform.

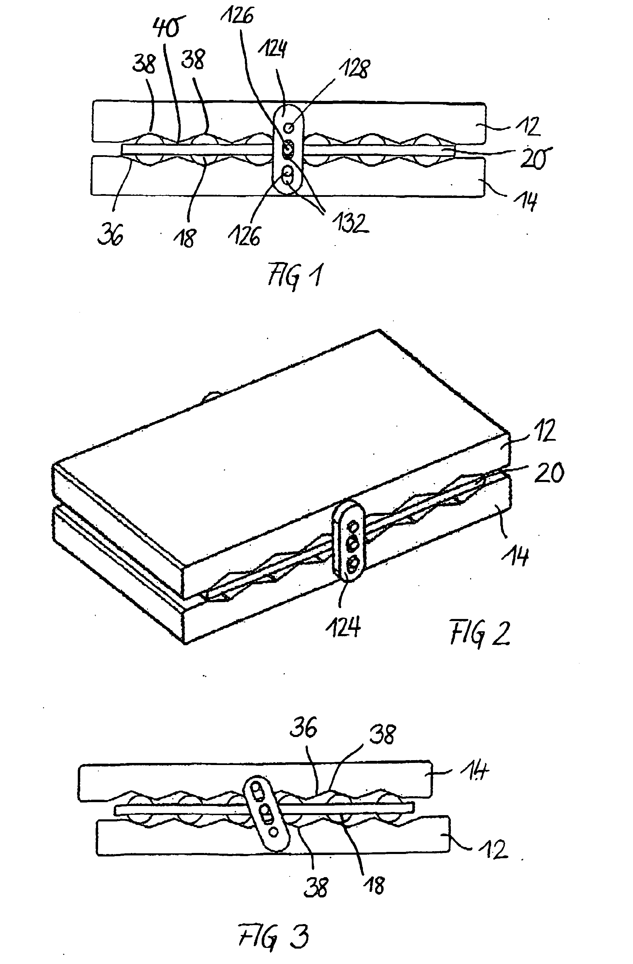

Figur 1 zeigt schematisch eine Seitenansicht einer Linearführung mit einem oberen plattenförmigen Führungselement 12 und einem unteren plattenförmigen Führungselement 14, die relativ zueinander bewegbar sind. Die Führungselemente 12, 14 weisen Laufbahnen 16 für dazwischen liegende Wälzkörper 18 auf, die in einem Käfig 20 drehbar gehalten sind. Bei den Wälzkörpern 18 handelt es sich beispielsweise um Kugeln oder Rollen.

Die Laufbahnen 16 der Führungselemente 12, 14 sind als Abfolge rampenförmiger Segmente 36 ausgebildet sind. Die Segmente 36 besitzen einander entsprechende dachförmige Querschnitte. Damit stellen sich die Segmente 36 als abwechselnde Folge von Kehlnuten 38 mit zwischenliegenden Graten 40 dar.

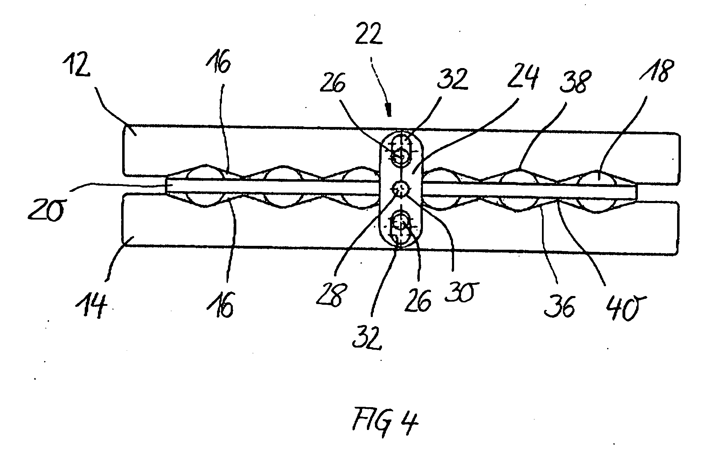

Die Laufbahnen 16 sind so zueinander angeordnet, dass in einer Mittelstellung der beiden Führungselemente 12, 14 die tiefsten Stellen der Kehlnuten 38 und die Grate 40 jeweils fluchtend zueinander liegen. In der in Figur 4 gezeigten Mittellage befinden sich die Wälzkörper 18 jeweils mittig in den Kehlnuten 38 der Laufbahnen 16.

Bei einer Relativbewegung der Führungselemente 12, 14 rollen die Wälzkörper auf den geneigten Rampenflächen der Segmente 36 ab, wodurch sich der Abstand der Führungselemente 12, 14 ändert. Die Bewegung ist durch den Hebel 24 begrenzt, so dass ein Segment nicht von dem ihm zugeordneten Wälzkörper überrollt werden kann. In Figur 3 ist eine der beiden möglichen Endlagen gezeigt. Die andere Endlage befindet sich auf der anderen Seite der in Figur 1 gezeigten Mittellage, wobei die symmetrische Dachform der Segmente zu einer entsprechend symmetrischen Verlagerung in der entgegengesetzten Richtung der Relativbewegung der Führungselemente zueinander führt.

Die Führungselemente 12,14 und der Käfig 20 sind mit einem Hebelgetriebe 22 beweglich verbunden. Das Hebelgetriebe 22 weist ein Verbindungselement in Form eines Hebels 24 auf An den Seitenflächen des unteren Führungselements 14 und an dem Käfig 20 ist jeweils ein Führungszapfen 126 und an dem oberen Führungselement 12 ein Gelenkzapfen 128 vorgesehen. Selbstverständlich kann der Gelenkzapfen 128 auch an dem unteren Führungselement 14 statt an dem oberen Führungselement 12 vorgesehen sein. In diesem Fall würde das obere Führungselement 12 den Führungszapfen 126 aufweisen. Die an dem Käfig 20 und dem unteren Führungselement 14 vorgesehenen Führungszapfen 128 greifen mit geringer Spielpassung in Langlöcher 132 ein, die sich in der Längsrichtung des Hebels 124 erstrecken.

In der Figur 4 ist dazu eine alternative Ausführungsform dargestellt, bei der an den Seitenflächen der Führungselemente 12, 14 jeweils ein Führungszapfen 26 und an dem Käfig 20 ein Gelenkzapfen 28 vorgesehen sind. Der Hebel 24 ist mittels des am Käfig 20 vorgesehen Gelenkzapfens 28 schwenkbar an dem Käfig 20 gehalten. Dazu weist der Hebel 24 eine Gelenköffnung 30 auf, in die der Gelenkzapfen 28 eingreift. Die an den beiden Führungselementen 12, 14 vorgesehenen Führungszapfen 26 greifen jeweils mit geringer Spielpassung in ein Langloch 32 ein, das sich in der Längsrichtung des Hebels 24 erstreckt. Dabei kann bei allen Ausführungsformen ein zweiter Hebel am gegenüberliegenden Rand der plattenförmigen Führungselemente 12, 14 vorgesehen sein.

Bei einer Relativbewegung der Führungselemente 12, 14 wird der Käfig 20 mit den Wälzkörpern 18 zwangsweise bewegt, d. h. der Käfig 20 ist zwangsgeführt. Durch die Synchronisation der Bewegung der Führungselemente 12, 14 und der Käfigbewegung befindet sich der Käfig 20 stets an der gewünschten Stelle. Ein Wandern des Käfigs 20 infolge von Gleitreibung wird dadurch ausgeschlossen. Der Hub der Führungselemente 12, 14 ist durch die Langlöcher 32, 132 begrenzt.

Durch Aufbringen eines Drehmoments an dem Hebel 24, 34,124 kann die Bewegung der Führungselemente 12, 14 ausgelöst werden.

Durch die Möglichkeit, den Abstand der beiden Führungselemente 12, 14 durch rampenförmige Segmente 36 zu verändern, eignet sich die Linearführung für Reibungsbremsen im Fahrzeugbau, insbesondere sogenannte Keilbremsen, um die Bremskraft mechanisch zu verstärken. Die Stellglieder der Bremse können z. B. senkrecht zu den Führungsbahnen auf ein Führungselement wirken, während das andere Führungselement über einen Bremsbelag auf ein bewegtes zu bremsendes Element wirkt. Der Antrieb kann aber bei einem festgelegten Führungselement auch auf den wenigstens einen Hebel erfolgen, der mit einem Sensor zur Winkelerfassung versehen sein kann. Die beschriebene Linearführung ermöglicht eine synchronisierte Bewegung der Führungselemente wahlweise auch senkrecht zur Erstreckungsrichtung der Führungsbahnen und besteht aus einem Minimum einfacher Teile. Der Raumbedarf senkrecht zu den Führungen ist sehr klein.

## Patentansprüche

1. Linearführung, beinhaltend folgende Merkmale:
- Wenigstens zwei relativ zueinander bewegbare, Laufbahnen (16) für Wälzkörper (18) aufweisenden Führungselemente (12, 14),
- die zwischen den Führungselementen (12, 14) liegenden Wälzkörper (18) sind in einem Käfig (20) angeordnet,
- wenigstens die Laufbahn (16) eines der Führungselemente (12, 14) ist derart ausgebildet, dass mit einem Längsverschieben der Führungselemente (12, 14) gegeneinander eine Abstandsänderung zwischen Führungselementen (12, 14) einhergeht, und
- die beiden Führungselemente (12, 14) und der Käfig (20) stehen über ein Hebelgetriebe (22) miteinander in Verbindung, das ihre Relativbewegungen synchronisiert und den Hub begrenzt.

2. Linearführung nach Anspruch 1, wobei wenigstens ein Hebel (24, 34, 124) vorgesehen ist, der an einem der Führungselemente (12, 14) oder dem Käfig (20) schwenkbar gehalten ist, und an dem anderen Führungselement (12, 14) und dem Käfig (20) beziehungsweise an beiden Führungselementen (12, 14) ein Führungszapfen (26) vorgesehen ist, der in ein sich in der Längsrichtung des Hebels (24, 34, 124) erstreckendes Langloch (32) eingreift.

3. Linearführung nach einem der Ansprüche 1 oder 2, wobei wenigstens die eine Laufbahn (16) wenigstens in einem Längsabschnitt rampenartig gestaltet ist.

4. Linearführung nach einem der Ansprüche 1 bis 3, wobei wenigstens die eine Laufbahn (16) in eine Abfolge gleichmäßig rampenförmig ausgebildeter Segmente (36) unterteilt ist.

5. Linearführung nach Anspruch 4, wobei die Segmente (36) kehlnutförmig ausgebildet sind.

6. Linearführung nach Anspruch 4, wobei die Segmente sägezatuiförmig ausgebildet sind.

7. Linearführung nach einem der Ansprüche 3 bis 6, wobei die Rampen linear oder progressiv ansteigen.

8. Linearführung nach einem der Ansprüche 3 bis 7, wobei die Laufbahnen (16) beider Führungselemente (12, 14) übereinstimmend ausgebildet sind.

9. Verwendung einer Linearführung nach einem der Ansprüche 1 bis 8 in einer Reibungsbremse mit einem Stellantrieb und einem Bremsbelag, wobei wenigstens ein Führungselement mit dem Bremsbelag einer Reibungsbremse verbunden ist und der Stellantrieb auf das andere Führungselement oder auf das Hebelgetriebe wirkt.

10. Verwendung einer Linearführung nach Anspruch 9, wobei Antriebselemente des Stellantriebs der Reibungsbremse eine Stellkraft oder ein Stellmoment auf den wenigstens einen Hebel ausüben.

11. Verwendung einer Linearführung nach Anspruch 9 oder 10, wobei der wenigstens eine Hebel mit Sensoren zur Winkelerfassung versehen ist.

## Claims

1. Linear guide, comprising the following features:
- at least two guide elements (12, 14) which can be moved relative to one another and have raceways (16) for rolling bodies (18),
- the rolling bodies (18) which lie between the guide elements (12, 14) are arranged in a cage (20),
- at least the raceway (16) of one of the guide elements (12, 14) is configured in such a way that a change in the spacing between guide elements (12, 14) is accompanied by a longitudinal displacement of the guide elements (12, 14) with respect to one another, and
- the two guide elements (12, 14) and the cage (20) are connected to one another via a lever mechanism (22) which synchronizes their relative movements and limits the distance.

2. Linear guide according to Claim 1, at least one lever (24, 34, 124) being provided which is held pivotably on one of the guide elements (12, 14) or the cage (20), and a guide journal (26) being provided on the other guide element (12, 14) and the cage (20) or on both guide elements (12, 14), which guide journal (26) engages into a slot (32) which extends in the longitudinal direction of the lever (24, 34, 124).

3. Linear guide according to either of Claims 1 and 2, at least the one raceway (16) being of ramp-like design at least in one longitudinal section.

4. Linear guide according to one of Claims 1 to 3, at least the one raceway (16) being divided into a sequence of segments (36) of uniformly ramp-shaped configuration.

5. Linear guide according to Claim 4, the segments (36) being of fillet groove-shaped configuration.

6. Linear guide according to Claim 4, the segments being of sawtooth-shaped configuration.

7. Linear guide according to one of Claims 3 to 6, the ramps rising linearly or progressively.

8. Linear guide according to one of Claims 3 to 7, the raceways (16) of both guide elements (12, 14) being of coinciding configuration.

9. Use of a linear guide according to one of Claims 1 to 8 in a friction brake having an actuating drive and a brake lining, at least one guide element being connected to the brake lining of a friction brake, and the actuating drive acting on the other guide element or on the lever mechanism.

10. Use of a linear guide according to Claim 9, drive elements of the actuating drive of the friction brake exerting an actuating force or an actuating moment on the at least one lever.

11. Use of a linear guide according to Claim 9 or 10, the at least one lever being provided with sensors for angle detection.

## Revendications

1. Guidage linéaire, comprenant les caractéristiques suivantes :
- au moins deux pistes de roulement (16) déplaçables l'une par rapport à l'autre, pour des éléments de guidage (12, 14) présentant des corps de roulement (18),
- les corps de roulement (18) situés entre les éléments de guidage (12, 14) sont disposés dans une cage (20),
- au moins la piste de roulement (16) de l'un des éléments de guidage (12, 14) est réalisée de telle sorte qu'il se produise une variation de l'écartement entre les éléments de guidage (12, 14) avec un déplacement longitudinal des éléments de guidage (12, 14) les uns par rapport aux autres, et
- les deux éléments de guidage (12, 14) et la cage (20) sont en liaison les uns avec les autres par le biais d'un mécanisme à levier (22) qui synchronise leurs mouvements relatifs et qui limite la course.

2. Guidage linéaire selon la revendication 1, dans lequel au moins un levier (24, 34, 124) est prévu, lequel est monté de manière pivotante au niveau de l'un des éléments de guidage (12, 14) ou de la cage (20), et un tourillon de guidage (26) est prévu au niveau de l'autre élément de guidage (12, 14) et au niveau de la cage (20) respectivement sur les deux éléments de guidage (12, 14), lequel tourillon de guidage vient en prise dans un trou oblong (32) s'étendant dans la direction longitudinale du levier (24, 34, 124).

3. Guidage linéaire selon l'une quelconque des revendications 1 ou 2, dans lequel au moins l'une des pistes de roulement (16) est configurée au moins dans une portion longitudinale en forme de rampe.

4. Guidage linéaire selon l'une quelconque des revendications 1 à 3, dans lequel au moins l'une des pistes de roulement (16) est divisée en une succession de segments (36) réalisés de manière uniforme en forme de rampe.

5. Guidage linéaire selon la revendication 4, dans lequel les segments (36) sont réalisés en forme de rainure cannelée.

6. Guidage linéaire selon la revendication 4, dans lequel les segments sont réalisés en forme de dents de scie.

7. Guidage linéaire selon l'une quelconque des revendications 3 à 6, dans lequel les rampes montent linéairement ou progressivement.

8. Guidage linéaire selon l'une quelconque des revendications 3 à 7, dans lequel les pistes de roulement (16) des deux éléments de guidage (12, 14) sont réalisées de manière à coïncider.

9. Utilisation d'un guidage linéaire selon l'une quelconque des revendications 1 à 8, dans un frein à friction comprenant un entraînement de réglage et une garniture de frein, dans laquelle au moins un élément de guidage est connecté à la garniture de frein d'un frein à friction, et l'entraînement de réglage agit sur l'autre élément de guidage ou sur le mécanisme à levier.

10. Utilisation d'un guidage linéaire selon la revendication 9, dans laquelle des éléments d'entraînement de l'entraînement de réglage du frein à friction exercent une force de réglage ou un couple de réglage sur l'au moins un levier.

11. Utilisation d'un guidage linéaire selon la revendication 9 ou 10, dans laquelle l'au moins un levier est pourvu de capteurs de détection angulaire.
